# EUROPÄISCHE PATENTSCHRIFT

(11) **EP 1 200 524 B1**
(45) Veröffentlichungstag und Bekanntmachung des Hinweises auf die Patenterteilung: **05.11.2003**
(21) Anmeldenummer: 00962308.3
(22) Anmeldetag: 11.08.2000
(51) Int. Cl.: C08L 83/04

(54) **DICHTUNGSMASSEN AUF SILIKONBASIS**
SILICON-BASED SEALANTS
MASSES D'ETANCHEITE A BASE DE SILICONE

(30) Priorität: 13.08.1999 DE 19938348; 13.08.1999 DE 19938533
(43) Veröffentlichungstag der Anmeldung: 02.05.2002
(73) Patentinhaber: Häring, Horst, 86199 Augsburg (DE)
(72) Erfinder: Häring, Horst, 86199 Augsburg (DE)
(74) Vertreter: Müller-Boré & Partner Patentanwälte
(86) Internationale Anmeldenummer: EP0007866
(87) Internationale Veröffentlichungsnummer: WO01012722

(56) Entgegenhaltungen:
- DE-A- 19 515 948
- GB-A- 2 137 217

## Beschreibung

Die vorliegende Erfindung betrifft disperse Zusammensetzungen auf Polyorganosiloxanbasis. Insbesondere betrifft die vorliegende Erfindung disperse Zusammensetzungen auf Polyorganosiloxanbasis, welche zum einen spezifische Poly(alkylsiloxane) als Verstärker oder zum anderen Polyether und/oder Polyesterpolyole und/oder Polyetherpolyole oder Derivate davon als Stabilisatoren verwenden oder welche ferner die vorgenannten Verstärker und Stabilisatoren gleichzeitig verwenden, sowie Dichtungsmassen auf Basis solcher Zusammensetzungen, die durch Aushärten solcher Zusammensetzungen erhältlich sind.

Dichtungsmassen auf Polyorganosiloxanbasis sind im Stand der Technik bekannt und können hinsichtlich ihres Aushärtungsmechanismus grundsätzlich in drei Gruppen eingeteilt werden: (1) durch Feuchtigkeit härtbare Dichtungsmassen, (2) Silikon-Latex-Dichtungsmassen bzw. Silikone auf Wasserbasis und (3) durch Additionsreaktion härtbare Dichtungsmassen. Insbesondere bei Dichtungsmassen , der Gruppe (1) in beispielsweise gelartiger Form treten bei der Lagerung über einen längeren Zeitraum Entmischungen derartiger Dispersionen auf, die sich bei einer späteren Anwendung als Nachteil erweisen, z.B. das sogenannte Ausbluten von Weichmachern bzw. Bindemitteln.

Derartige Dichtungsmassen bzw. Dichtstoffe enthalten auch Silikonöle als Weichmacher. In der letzten Zeit wurden aus wirtschaftlichen Gründen die relativ teuren Silikonöle durch Kohlenwasserstoffe mit niedrigem Molekulargewicht, beispielsweise Molekulargewichte von 230 - 250, teilweise oder vollständig ersetzt. Beispielsweise enthalten derzeit im Handel erhältliche Dichtungsmassen zwischen 10 - 50 Gew.-% derartiger Kohlenwasserstoffe als Extender. Die Verwendung von derartigen Kohlenwasserstoffen als Extender hat jedoch nachteiligerweise zur Folge, daß die Shore A-Härte drastisch absinkt, da diese Kohlenwasserstoffe auch Weichmachereigenschaften aufweisen. Aus dieser Erniedrigung der Shore A-Härte von im Stand der Technik bekannten Dichtungsmassen folgt unter anderem, daß die Oberflächen der Dichtungsmassen verschlechterte mechanische Eigenschaften sowie schlechtere Abriebbeständigkeit aufweisen. Durch die Verwendung von Kohlenwasserstoffen als Extender sind somit Shore A-Härten von ≥ 15 nicht mehr oder nur durch erhöhte Zugabe von Hilfsstoffen wie (pyrogener) Kieselsäure, die jedoch sehr teuer ist, realisierbar. Ferner wird auch durch die Verwendung von derartigen Kohlenwasserstoffen die Verarbeitung der Dichtungsmassen verschlechtert. Beispielsweise zeigen derartige Dichtungsmassen beim Aufbringen eine schlechte Oberflächenglättung und sind zu "dünn" eingestellt Dies wird in der Fachsprache als ein zu weicher "body" bezeichnet.

DE 195 15 948 A1 beschreibt lagerstabile, alkoxyvemetzende Einkomponenten-Siliconkautschukmischungen, welche als Stabilisatoren Silylketenacetale enthalten. GB 2 137 217 A beschreibt eine im wesentlichen wasser- und säurefreie, bei Raumtemperatur vulkanisierbare Organopolysiloxanzusammensetzung, die unter normalen Bedingungen in Abwesenheit von Feuchtigkeit für einen langen Zeitraum stabil und im wesentlichen nicht korrosiv ist.

Somit liegt der vorliegenden Erfindung die Aufgabe zugrunde, neue disperse Systeme für Dichtungsmassen bereitzustellen, die neben ausgezeichneten thixotropen Eigenschaften und einer verbesserten Verdickung eine ausreichende Lagerstabilität ohne wesentliche Entmischung aufweisen sollen. Ferner sollen sich die ausgehärteten Dichtungsmassen möglichst durch eine hohe Shore A-Härte auszeichnen.

Diese Aufgabe wird durch die in den Ansprüchen gekennzeichneten Ausführungsformen gelöst

Gemäß dem ersten Aspekt der vorliegenden Erfindung wird eine disperse Zusammensetzung bereitgestellt, welche mindestens ein Polyorganosiloxan mit zur Härtung befähigten Gruppen, vorzugsweise Endgruppen, mindestens einen Vemetzer auf Silanbasis, mindestens ein Silikonöl als Weichmacher und/oder einen kohlenwasserstoff als Extender und mindestens ein Poly(alkylsiloxan) mit der Formel (I) 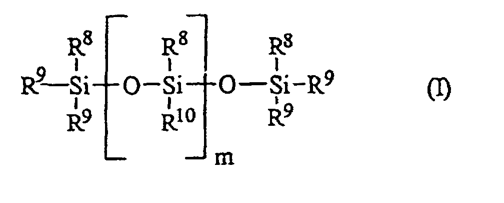
- R⁸: einen C₁-C₈-Alkylrest, vorzugsweise eine Methyl-, Ethyl- oder Propylgruppe, bedeutet,
- R⁹: jeweils unabhängig voneinander ein Wasserstoffatom, eine Hydroxygruppe, einen C₁-C₈-Alkylrest, vorzugsweise eine Methyl-, Ethyl- oder Propylgruppe, oder einen C₁-C₈-Alkoxyrest, vorzugsweise eine Methoxy-, Ethoxy- oder Propoxygruppe bedeutet, wobei die endständigen Si-Gruppen vorzugsweise eine Methylhydroxylsilyl- oder Trimethylsilylgruppe sind,
- R¹⁰: einen C₁-C₈-Alkoxyrest, eine Aminogruppe -NR¹¹R¹², eine Amidogruppe -N(R¹¹)COR¹², eine Ketoximogruppe -ONCR¹¹R¹² oder eine Acyloxygruppe - OCOR¹¹ bedeutet, worin R¹¹ und R¹² jeweils unabhängig voneinander ein Wasserstoffatom, einen C₁-C₈-Alkylrest, wie z.B. Methyl, Ethyl oder Propyl, oder einen C₃-C₇-Cycloalkylrest, wie z.B. Cyclohexyl, bedeuten, und
- m: eine ganze Zahl ist und 2 oder mehr bedeutet.

In einer bevorzugten Ausführungsform gemäß dem ersten Aspekt der vorliegenden Erfindung ist m eine ganze Zahl von 8 bis einschließlich 20, vorzugsweise 8 bis einschließlich 12. Das erfindungsgemäß verwendete Poly(alkylsiloxan) kann vorzugsweise in einer Menge von 0,5 bis 10 Gew.-%, mehr bevorzugt 1 bis 5 Gew.-%, bezogen auf die Gesamtmenge der erfindungsgemäßen Zusammensetzung, vorliegen. !n einer besonders bevorzugten Ausführungsform der vorliegenden Erfindung werden als Verstärker Poly(alkylalkoxy)siloxane eingesetzt, d.h. der Rest R¹⁰ in der Formel (1) ist ein C₁-C₈-Alkoxyrest, vorzugsweise eine Methoxy, Ethoxy- oder Propoxygruppe.

Solche als Verstärker verwendeten Poly(alkylsiloxane) sind beispielsweise durch Umsetzung von Produkten der Müller-Rochow-Synthese, wie Methylchlorsilane, oder von mit Trimethylsilylgruppen terminierten, wasserstoffhaltigen Polymethylsiloxanen gemäß Formel (1), wobei in diesem Fall der Rest R¹⁰ ein Wasserstoffatom darstellt, mit Alkoholen, wie z.B. Methanol, Aminen, Amidoverbindungen, Ketoximen oder Acyloxyverbindungen in Gegenwart von beispielsweise Pt-Katalysatoren erhältlich.

Die als Weichmacher zu verwendenden Silikonöle unterliegen keiner Beschränkung. Vorzugsweise werden jedoch herkömmliche Silikonöle mit einer Viskosität im Bereich von 100 bis 60.000 cSt eingesetzt. Solche herkömmlichen Silikonöle sind beispielsweise Siliconöl E100, vertrieben von Bayer AG, Leverkusen, oder entsprechende von der Firma Wacker, Burghausen, bzw. von Dow Corning vertriebene Silikonöle. Die als Extender zu verwendenden Kohlenwasserstoffe unterliegen ebenfalls keiner Beschränkung. Vorzugsweise werden Kohlenwasserstoffe wie Alkylbenzole mit einer Viskosität im Bereich von 100 bis 250 cSt, wie z.B. Progeline 150, vertrieben von Chevron Oil, oder ähnliche von Hüls AG vertriebene Alkylbenzole, cyclische Kohlenwasserstoffe mit einer Viskosität im Bereich von 5 bis 10 cSt, vorzugsweise 6 bis 7 cSt, wie z.B. Exxon D 140, oder Testbenzine, wie z.B. Shell Sol 200, eingesetzt.

In einer bevorzugten Ausführungsform gemäß dem ersten Aspekt der vorliegenden Erfindung enthält die disperse Zusammensetzung weiter mindestens einen Polyether und/oder ein Polyesterpolyol und/oder ein Polyetherpolyol und/oder mindestens ein Derivat davon als Stabilisator oder ein mindestens zwei dieser Stabilisatoren enthaltendes Gemisch, wodurch u.a. die Verdickung, die Glättbarkeit der Oberfläche der noch nicht ausgehärteten Dichtungsmasse und die Thixotropie der dispersen Zusammensetzung weiter verbessert wird.

Gemäß dem zweiten Aspekt der vorliegenden Erfindung wird eine disperse Zusammensetzung bereitgestellt, welche mindestens ein Polyorganosiloxan mit zur Härtung befähigten Gruppen, vorzugsweise Endgruppen, mindestens einen Vernetzer auf Silanbasis und mindestens einen Polyether und/oder ein Polyesterpolyol und/oder ein Polyetherpolyol und/oder mindestens ein Derivat davon als Stabilisator oder ein mindestens zwei dieser Stabilisatoren enthaltendes Gemisch enthält.

Das in den erfindungsgemäßen Zusammensetzungen gemäß dem ersten und zweiten Aspekt verwendete Polyorganosiloxan unterliegt keiner besonderen Beschränkung und kann ein lineares, verzweigtes oder zyklisches Polyorganosiloxan sein. Das Polyorganosiloxan der erfindungsgemäßen Zusammensetzungen enthält mindestens eine Silizium-funktionelle oder organofunktionelle Gruppe, die zur Reaktion mit dem Vernetzer auf Silanbasis und somit zur Härtung der erfindungsgemäßen Zusammensetzung befähigt ist. Ein Beispiel derartiger Gruppen ist die Silanolgruppe.

In einer bevorzugten Ausführungsform gemäß dem ersten und zweiten Aspekt der vorliegenden Erfindung ist das Polyorganosiloxan ein α,ω-Dihydropolydialkylsiloxan mit der Formel (ll) 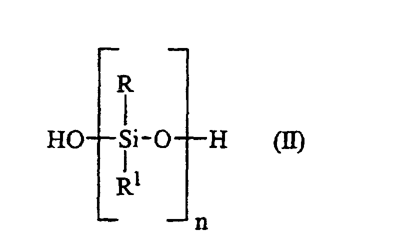 wobei die Reste R und R¹ unabhängig voneinander einen C₁₋₄-Alkylrest und vorzugsweise einen Methyl- oder Ethylrest bedeuten, und mit einem gewichtsmittleren Molekulargewicht im Bereich von 30.000 bis 150.000. In einer besonders bevorzugten Ausführungsform ist das Polyorganosiloxan ein α,ω-Dihydropolydimethylsiloxan mit einem Molekulargewicht im Bereich von 60.000 bis 103.000.

Das Polyorganosiloxan kann dabei vorzugsweise in einer Menge von 20 bis 80 Gew.-%, bezogen auf das Gesamtgewicht der erfindungsgemäßen Zusammensetzung gemäß dem ersten bzw. zweiten Aspekt der vorliegenden Erfindung, vorliegen.

Der Vernetzer auf Silanbasis der erfindungsgemäßen Zusammensetzung gemäß dem ersten und zweiten Aspekt der vorliegenden Erfindung unterliegt keiner besonderen Beschränkung und ist vorzugsweise aus der Gruppe, bestehend aus Alkoxysilanen, Acyloxysilanen, Ketoximosilanen, Aminosilanen, Amidosilanen und Amidoalkoxysilanen, ausgewählt.

Beispiele für Alkoxysilane sind Verbindungen mit der Formel R^{2y}Si (OR³)_{4-y}, wobei der Rest R² jeweils ein C₁₋₈-Alkylrest, vorzugsweise eine Methyl-, Ethyl- oder Propylgruppe, ein Alkenylrest, vorzugsweise eine Vinylgruppe, oder ein Alkenylalkylrest, vorzugsweise eine Vinylethylgruppe, ist, der Rest R³ jeweils ein C₁₋₈-Alkylrest, vorzugsweise eine Methyl-, Ethyl- oder Propylgruppe, ist und y eine ganze Zahl von 1 bis 3 ist.

Beispiele für Acyloxysilane sind Verbindungen mit der Formel R⁴_{y}Si(OCOR⁵)_{4-y,} wobei die Reste R⁴ und R⁵ jeweils unabhängig voneinander ein C₁₋₈-Alkylrest, vorzugsweise eine Methyl- oder Ethylgruppe, sind und y eine ganze Zahl von 1 bis 3 ist.

Beispiele für Ketoximosilane sind Verbindungen mit der Formel R⁶_{y}Si(ONCR⁶₂)_{4-y,} wobei die Reste R⁶ jeweils unabhängig voneinander ein C₁₋₈-Alkylrest, vorzugsweise eine Methyl-, Ethyl- oder Propylgruppe, oder ein Alkenylrest, vorzugsweise eine Vinylgruppe, sind und y eine ganze Zahl von 1 bis 3 ist.

Beispiele für Aminosilane sind Verbindungen mit der Formel R⁷_{y}Si(NR³₂)_{4-y}, wobei der Rest R⁷ jeweils ein C₁₋₈-Alkylrest, vorzugsweise eine Methyl-, Ethyl- oder Propylgruppe, ein C₃₋₈-Cycloalkylrest, vorzugsweise eine Cyclohexylgruppe, oder ein Arylrest, vorzugsweise eine Phenylgruppe, ist, der Rest R³ jeweils die vorstehend definierten Reste bedeutet und y eine ganze Zahl von 1 bis 3 ist.

Beispiele für Amidosilane sind Verbindungen mit der Formel 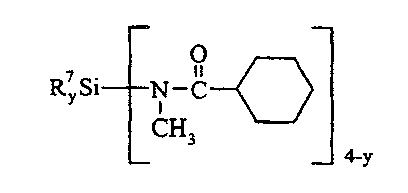 wobei der Rest R⁷ jeweils die vorstehend definierten Reste bedeutet und y eine ganze Zahl von 1 bis 3 ist.

Beispiele für Amidoalkoxysilane sind Verbindungen mit der Formel 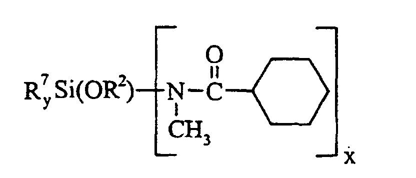 wobei die Reste R² und R⁷ jeweils die vorstehend definierten Reste bedeuten, x und y jeweils eine ganze Zahl von 1 oder 2 sind, mit der Maßgabe, daß x ≠ y ist.

Der Vernetzer auf Silanbasis kann vorzugsweise in einer Menge von 2 bis 6 Gew.-%, bezogen auf jeweils das Gesamtgewicht der Zusammensetzung gemäß dem ersten und zweiten Aspekt der vorliegenden Erfindung, vorliegen.

Der vorgenannte Polyether oder das vorgenannte Polyetherderivat unterliegen keiner besonderen Beschränkung und sind vorzugsweise aus der Gruppe, bestehend aus Polyoxyethylen-Derivaten der Sorbitanester, beispielsweise Polyethoxysorbitanlaurat, -palmitat, -stearat, -tristearat, -oleat, -trioleat, und Polymerisationsprodukten aus Propylenoxid und Ethylenoxid, ausgewählt.

Der Polyether oder das Polyetherderivat können vorzugsweise in einer Menge von 0,3 bis 10 Gew.-%, vorzugsweise 0,5 bis 10 Gew.-%, besonders bevorzugt in einer Menge von 0,3 bis 1,5 Gew.-%, bezogen auf jeweils das Gesamtgewicht der Zusammensetzung gemäß dem ersten und zweiten Aspekt der vorliegenden Erfindung, vorliegen.

Das vorgenannte Polyesterpolyol bzw. das Polyetherpolyol oder die vorgenannten Polyester- bzw. Polyetherpolyolderivate unterliegen keiner besonderen Beschränkung und sind vorzugsweise aus der Gruppe, bestehend aus Ethylen-, Propylen- und Butylenoxid und Mischpolymerisaten aus den vorgenannten Polymerisationsprodukten, wie z.B. Ethylen- und Propylenoxid oder Propylen- und Butylenoxid usw., mit einem Molekulargewicht von 12.200 und einer Hydroxylzahl von 10 (mg KOH/g), ausgewählt.

Das Polyesterpolyol oder das Polyesterpolyolderivat können vorzugsweise in einer Menge von 0,3 bis 20 Gew.-%, jedoch in bevorzugter Weise von 0,3 bis 1,5 Gew.-%, bezogen auf jeweils das Gesamtgewicht der Zusammensetzung gemäß dem ersten und zweiten Aspekt der vorliegenden Erfindung, vorliegen.

Das Polyetherpolyol oder das Polyetherpolyolderivat können vorzugsweise in einer Menge von 0,3 bis 20 Gew.-%, vorzugsweise 0,5 bis 20 Gew.-%, jedoch in bevorzugter Weise von 0,3 bis 1,5 Gew.-%, bezogen auf jeweils das Gesamtgewicht der Zusammensetzung gemäß dem ersten und zweiten Aspekt der vorliegenden Erfindung, vorliegen.

Die erfindungsgemäßen Zusammensetzungen gemäß dem ersten und zweiten Aspekt der vorliegenden Erfindung können weitere im Stand der Technik für Dichtungsmassen bekannte Zusatzstoffe bzw. Hilfsstoffe, wie Thixotropiemittel, Verdickungsmittel, beispielsweise Polykieselsäuren, Tonmineralien, Zeolithe, (pyrogene) Kieselsäuren, Calciumcarbonat, etc., und Absetzverhinderungsmittel, enthalten.

Überraschenderweise hat sich bei den erfindungsgemäßen Zusammensetzungen gezeigt, daß die erfindungsgemäß verwendeten Stabilisatoren diese weiteren Zusatzstoffe mindestens teilweise ersetzen können, wobei der Polyether, das Polyetherderivat, das Polyesterpolyol, das Polyesterpolyolderivat, das Polyetherpolyol bzw. das Polyetherpolyolderivat neben der Hauptfunktion als Stabilisator auch thixotrope Eigenschaften und/oder Verdickungseigenschaften in den erfindungsgemäßen Zusammensetzungen aufweisen können. Dies hat vorteilhafterweise zur Folge, daß die Herstellung der erfindungsgemäßen Zusammensetzungen durch Ersetzen der zum Teil teuren Zusatzstoffe durch die erfindungsgemäß verwendeten Stabilisatoren ökonomischer durchgeführt werden kann.

Eine besonders gute Wirkung gegen Entmischung der erfindungsgemäßen Zusammensetzungen gemäß dem ersten und zweiten Aspekt der vorliegenden Erfindungen kann bei gleichzeitiger Verwendung der vorstehend definierten Stabilisatoren und (pyrogener) Kieselsäure erzielt werden. Damit kann beispielsweise ein Ausbluten von Weichmachern über einen längeren Lagerzeitraum (z.B. in den Nippeln von Kartuschen) verhindert werden. In besonders bevorzugten Zusammensetzungen gemäß dem ersten Aspekt der vorliegenden Erfindung ist die (pyrogene) Kieselsäure in einer Menge von 0,5 bis 10 Gew.-%, vorzugsweise 0,5 bis 2 Gew.-%, bezogen auf das Gesamtgewicht der Zusammensetzung, enthalten. In besonders bevorzugten Zusammensetzungen gemäß dem zweiten Aspekt der vorliegenden Erfindung ist die (pyrogene) Kieselsäure in einer Menge von 1,0 bis 15 Gew.-%, bezogen auf das Gesamtgewicht der Zusammensetzung, enthalten. Es wurde festgestellt, dass in solchen Ausführungsformen vorteilhafterweise keinerlei Entmischung der Dispersion auftritt.

Ein weiterer Gegenstand der Erfindung ist die Dichtungsmasse bzw. der Dichtstoff, die bzw. der durch Aufbringen auf einen Gegenstand und anschließendes Aushärten der erfindungsgemäßen Zusammensetzungen erhältlich ist. Insbesondere bei der Verwendung der vorstehend definierten Poly(alkylsiloxane) als Verstärker zeigen die Dichtungsmassen überraschenderweise Shore A-Härten von ≥ 15, beispielsweise Shore A-Härten von bis zu 70. Diese erhöhten Shore A-Härten der erfindungsgemäßen, ausgehärteten Dichtungsmassen sind insbesondere auf eine "Verdichtung" der Vernetzung durch die u.a. als Vernetzer wirkenden, erfindungsgemäß verwendeten Poly(alkylsiloxane), wie z.B. Poly(alkylalkoxy)siloxane, Poly(alkylamino)siloxane, Poly(alkylamido)siloxane, Poly(alkylketoximo)siloxane oder Poly(alkylacyloxy)siloxane, zurückzuführen. Dies hat vorteilhafterweise zur Folge, daß durch Zugabe von derartigen Verstärkern Dichtungsmassen erhalten werden können, die ausgezeichnete mechanische Eigenschaften, insbesondere verbesserte Oberflächenhärten, aufweisen, die sonst im wesentlichen nur durch teure Hilfsstoffe erhalten werden können. Ferner zeigen die erfindungsgemäßen Zusammensetzungen neben einer verbesserten Lagerstabilität auch ausgezeichnete thixotrope Eigenschaften und/oder ausgezeichnete Verdickungseigenschaften.
Durch die nachfolgenden Beispiele wird die vorliegende Erfindung näher erläutert.

### Beispiele

Die einzelnen Komponenten der nachfolgenden Formulierungen entsprechen folgenden Bestandteilen:
1) Silopren E80 : α,ω-Dihydroxydimethylpolysiloxan, Viskosität 80.000 cSt. (vertrieben von Bayer AG, Leverkusen)
2) Siliconöl E100: α,ω-Di-trimethylsilyldimethylpolysiloxan (vertrieben von Bayer AG, Leverkusen)
3) UCP Silicoplast P155: Alkylbenzol (vertrieben von Universal Chemical Products GmbH, Kissing)
4) Polyetherpolyol 50%ig in Alkylbenzol
5) Poly(alkylalkoxy)siloxan
6) UCP Vernetzer 70:30: 30 Teile Methyltriacetoxysilan, 70 Teile Ethyltriacetoxysilan
7) Pyrogenes Siliciumdioxid: HDK V 15, vertrieben von Fa. Wacker Burghausen
8) UCP Additive SM: Metallkomplexbeschleuniger gelöst, (vertrieben von Universal Chemical Products GmbH, Kissing)
9) UCP Katalysator 447: Abmischung von Dialkylzinndicarboxylaten (vertrieben von Universal Chemical Products GmbH, Kissing)
10) UCP Vernetzer MTO: Methyltrisethylmethylketoximosilan (vertrieben von Universal Chemical Products GmbH, Kissing)
11) UCP Additive Ameo: γ-Aminopropyltrisacetoxysilan (vertrieben von Universal Chemical Products GmbH, Kissing)
12) UCP Additive DA: Aminoethylaminopropyltriethoxysilan (vertrieben von Universal Chemical Products GmbH, Kissing)
13) UCP Katalysator 2175: Dialkylzinndicarboxylat

Es wurden die folgenden Formulierungen hergestellt und hinsichtlich der Extrusionsrate, die ein Mass für die Verdickungswirkung ist, untersucht. Die Ergebnisse sind nachstehend aufgeführt. Zur Bestimmung der Extrusionsrate wurde eine volle Kartusche mit 310 ml Inhalt verwendet. Das Material wurde dann auf 20°C gebracht. Die Kartusche war mit einer Düse versehen, die eine Öffnung von 3,5 mm aufwies. Diese wurde in eine Druckluftpistole eingeführt und bei 3 bar 15 Sekunden lang ausgespritzt. Das ausgedrückte Material wurde gewogen. Das erhaltene Gewicht in Gramm wurde als Extrusionsrate bezeichnet. Die in den Tabellen angeführten Mengenangaben sind jeweils in Gramm angegeben.

| | Beispiel 1 | Beispiel 2 | Beispiel 3 |
|---|---|---|---|
| Silopren E80 | 596 | 596 | 596 |
| Siliconöl 100 cSt. | 125 | 135 | 105 |
| UCP-Silicoplast P155 | 125 | 125 | 125 |
| Polyetherpolyol 50%(in Alkylbenzol) | 10 | - | 10 |
| Poly(alkylalkoxy)siloxan | - | - | 20 |
| UCP Vernetzer 70:30 | 40 | 40 | 40 |
| Pyrogenes Siliziumdioxid HDK 15 | 95 | 95 | 95 |
| UCP Additive SM | 5 | 5 | 5 |
| UCP Katalysator 447 | 4 | 4 | 4 |
| Extrusionsrate | 18 | 26 | 18 |
| Shore-A-Härte nach 6 Tagen Luftrocknung | 18 | 20 | 27 |

Die Beispiele 1 und 3 sind erfindungsgemäße Formulierungen gemäß dem ersten (Beispiel 3) bzw. zweiten (Beispiel 1) Aspekt der vorliegenden Erfindung, wohingegen Beispiel 2 eine Vergleichsformulierung ist.

Ein Vergleich des Beispiels 1, das gemäß dem zweiten Aspekt der vorliegenden Erfindung ein Polyetherpolyol enthält, mit der Formulierung gemäß dem Beispiel 2, das kein Polyetherpolyol enthält, zeigt deutlich den Einfluß des Polyetherpolyols auf die Extrusionsrate, d.h. das Beispiel 1 zeigt gegenüber dem Beispiel 2 eine deutlich verbesserte Verdickungswirkung.

Ein Vergleich des Beispiels 3, das gemäß dem ersten Aspekt der vorliegenden Erfindung als Verstärker ein Poly(alkylalkoxy)siloxan enthält, mit der Formulierung gemäß dem Beispiel 2, das keinen erfindungsgemäßen Verstärker enthält, zeigt deutlich den Einfluß des Poly(alkylalkoxy)siloxans als erfindungsgemäß verwendeter Verstärker auf die Shore-A Härte. Zudem zeigt sich in dem Beispiel 3, dass das Einbringen des Poly(alkylalkoxy)siloxans die Verdickungswirkung nicht negativ beeinflusst.

Die folgenden Beispiele 4, 5 und 6 zeigen den Einfluß des Polyetherpolyols bzw. des Poly(alkylsiloxans) auf die Extrusionsrate und somit die Verdickungsrate bzw. die Shore-A-Härte in neutralen Systemen auf Ketoximosilan-Basis. Die Beispiele 4 und 6 sind erfindungsgemäße Formulierungen gemäß dem ersten (Beispiel 6) bzw. zweiten (Beispiel 4) Aspekt der vorliegenden Erfindung, wohingegen Beispiel 5 wiederum eine Vergleichsformulierung ist.

| | Beispiel 4 | Beispiel 5 | Beispiel 6 |
|---|---|---|---|
| Silopren E80 | 486 | 486 | 486 |
| Siliconöl 100 cSt. | 160 | 170 | 140 |
| UCP-Silicoplast P155 | 190 | 190 | 190 |
| Polyetherpolyol 50%(in Alkylbenzol) | 10 | - | 10 |
| Poly(alkylalkoxy)siloxan | - | - | 20 |
| UCP Vernetzer MTO | 45 | 45 | 45 |
| Pyrogenes Siliziumdioxid HDK 15 | 88 | 88 | 88 |
| UCP Additive Ameo | 6 | 6 | 6 |
| UCP Additive DA | 3 | 3 | 3 |
| UCP Additive SM | 3 | 3 | 3 |
| UCP Katalysator 2175 | 9 | 9 | 9 |
| Extrusionsrate | 3 | 50 | 38 |
| Shore-A-Härte nach 6 Tagen Luftrocknung | 16 | 15 | 21 |

Ein Vergleich des Beispiels 6, das gemäß dem ersten Aspekt der vorliegenden Erfindung als Verstärker ein Poly(alkylalkoxy)siloxan enthält, mit der Formulierung gemäß dem Beispiel 5, das keinen erfindungsgemäßen Verstärker enthält, zeigt deutlich den Einfluß des Poly(alkylalkoxy)siloxans auf die Shore-A Härte, und zwar einen Anstieg von ca. 40%.

## Patentansprüche

1. Disperse Zusammensetzung, enthaltend mindestens ein Polyorganosiloxan mit zur Härtung befähigten Gruppen, mindestens einen Vernetzer auf Silanbasis, mindestens ein Silikonöl als Weichmacher und/oder einen Kohlenwasserstoff als Extender und als Verstärker mindestens ein Poly(alkylsiloxan) mit der Formel (l) 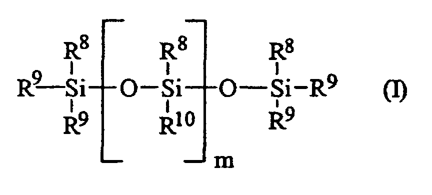 worin
R⁸ einen C₁-C₈-Alkylrest bedeutet,
R⁹ jeweils unabhängig voneinander ein Wasserstoffatom, eine Hydroxygruppe, einen C₁-C₈-Alkylrest, vorzugsweise eine Methyl-, Ethyl- oder Propylgruppe, oder einen C₁-C₈-Alkoxyrest, vorzugsweise eine Methoxy-, Ethoxy- oder Propoxygruppe bedeutet, wobei die endständigen Si-Gruppen vorzugsweise eine Methylhydroxylsilyl- oder Trimethylsilylgruppe sind,
R¹⁰ einen C₁-C₈-Alkoxyrest, eine Aminogruppe -NR¹¹R¹², eine Amido-gruppe -N(R¹¹)COR¹², eine Ketoximogruppe -ONCR¹¹R¹² oder eine Acyloxygruppe -OCOR¹¹ bedeutet, worin R¹¹ und R¹² jeweils unabhängig voneinander ein Wasserstoffatom, einen C₁-C₈-Alkylrest oder einen C₃-C₇-Cycloalkylrest bedeuten, und
m eine ganze Zahl ist und 2 oder mehr bedeutet.

2. Zusammensetzung nach Anspruch 1, wobei m eine ganze Zahl von 8 bis einschließlich 20 ist.

3. Zusammensetzung nach Anspruch 1 oder 2, wobei das Poly(alkylsiloxan) in einer Menge von 0,5 bis 10 Gew.-%, bezogen auf die Gesamtmenge der Zusammensetzung vorliegt.

4. Zusammensetzung nach einem der Ansprüche 1 bis 3, welche weiter mindestens einen Polyether und/oder ein Polyesterpolyol und/oder ein Polyetherpolyol und/oder mindestens ein Derivat davon als Stabilisator oder ein mindestens zwei dieser Stabilisatoren enthaltendes Gemisch enthält.

5. Disperse Zusammensetzung, enthaltend mindestens ein Polyorganosiloxan mit zur Härtung befähigten Gruppen, mindestens einen Vemetzer auf Silanbasis und mindestens einen Polyether und/oder ein Polyesterpolyol und/oder ein Polyetherpolyol und/oder mindestens ein Derivat davon als Stabilisator oder ein mindestens zwei dieser Stabilisatoren enthaltendes Gemisch.

6. Zusammensetzung nach einem der Ansprüche 1 bis 5, wobei die zur Härtung befähigten Gruppen Endgruppen des Polyorganosiloxans sind.

7. Zusammensetzung nach einem der Ansprüche 1 bis 6, wobei das Polyorganosiloxan ein lineares, verzweigtes oder zyklisches Polysiloxan ist.

8. Zusammensetzung nach einem der Ansprüche 1 bis 7, wobei das Polyorganosiloxan ein α,ω-Dihydropolydimethylsiloxan ist.

9. Zusammensetzung nach einem der Ansprüche 1 bis 8, wobei das Polyorganosiloxan in einer Menge von 20 bis 80 Gew.%, bezogen auf das Gesamtgewicht der Zusammensetzung, vorliegt.

10. Zusammensetzung nach einem der Ansprüche 1 bis 9, wobei der Vernetzer aus der Gruppe, bestehend aus Alkoxysilanen, Acyloxysilanen, Ketoximosilanen, Aminosilanen, Amidosilanen und Amidoalkoxysilanen, ausgewählt ist.

11. Zusammensetzung nach einem der Ansprüche 1 bis 10, wobei der Vernetzer in einer Menge von 2 bis 6 Gew.%, bezogen auf das Gesamtgewicht der Zusammensetzung, vorliegt.

12. Zusammensetzung nach einem der Ansprüche 1 bis 11, wobei der Polyether oder das Polyetherderivat aus der Gruppe, bestehend aus Polyoxyethylen-Derivaten der Sorbitanester und Polymerisationsprodukten aus Propylenoxid und Ethylenoxid, ausgewählt sind.

13. Zusammensetzung nach einem der Ansprüche 1 bis 12, wobei der Polyether oder das Polyetherderivat in einer Menge von 0,3 bis 10 Gew.-%, bezogen auf das Gesamtgewicht der Zusammensetzung, vorliegen.

14. Zusammensetzung nach einem der Ansprüche 1 bis 13, wobei das Polyesterpolyol bzw. das Polyetherpolyol oder die Polyester- bzw. Polyetherpolyolderivate aus der Gruppe, bestehend aus Ethylen-, Propylen- und Butylenoxid und Mischpolymerisaten davon mit einem Molekulargewicht von etwa 12.200 und einer Hydroxylzahl von 10 (mg KOH/g), ausgewählt ist.

15. Zusammensetzung nach einem der Ansprüche 1 bis 14, wobei das Polyesterpolyol oder das Polyesterpolyolderivat in einer Menge von 0,3 bis 20 Gew.%, bezogen auf das Gesamtgewicht der Zusammensetzung, vorliegen.

16. Zusammensetzung nach einem der Ansprüche 1 bis 15, wobei das Polyetherpolyol oder das Polyetherpolyolderivate in einer Menge von 0,3 bis 20 Gew.%, bezogen auf das Gesamtgewicht der Zusammensetzung, vorliegen.

17. Zusammensetzung nach einem der Ansprüche 1 bis 16, weiter enthaltend mindestens ein Thixotropiemittel und/oder ein Verdickungsmittel und/oder ein Absetzverhinderungsmittel.

18. Zusammensetzung nach Anspruch 17, wobei als Verdickungsmittel (pyrogene) Kieselsäure verwendet wird.

19. Dichtungsmasse, erhältlich durch Aushärten der Zusammensetzung nach einem der vorhergehenden Ansprüche.

20. Verwendung eines Poly(alkylsiloxans), wie in einem der Ansprüche 1 bis 3 definiert, als Verstärker in dispersen Zusammensetzungen für Dichtungsmassen auf Polyorganosiloxanbasis.

## Claims

1. Disperse composition comprising at least one polyorganosiloxane having groups capable of curing, at least one silane-based crosslinker, at least one silicone oil plasticizer and/or a hydrocarbon extender and as reinforcing agent at least one poly(alkylsiloxane) with the formula (I) 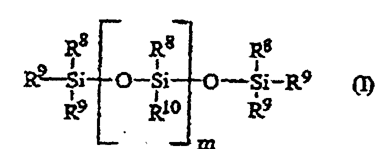 in which
R⁸ is a C₁-C₈ alkyl radical,
R⁹ independently at each occurrence is a hydrogen atom, a hydroxyl group, a C₁-C₈ alkyl radical, preferably a methyl, ethyl or propyl group, or a C₁-C₈ alkoxy radical, preferably a methoxy, ethoxy or propoxy group, the terminal Si groups preferably a methylhydroxysilyl or trimethylsilyl group,
R¹⁰ is a C₁-C₈ alkoxy radical, an amino group -NR¹¹R¹², an amido group -N(R¹¹)COR¹², a ketoximo group -ONCR¹¹R¹² or an acyloxy group -OCOR¹¹, in which R¹¹ and R¹² independently at each occurrence are a hydrogen atom, a C₁-C₈ alkyl radical or a C₃-C₇ cycloalkyl radical, and
m is a whole number and is 2 or more.

2. Composition according to Claim 1, wherein m is a whole number from 8 up to and including 20.

3. Composition according to Claim 1 or 2, wherein the poly(alkylsiloxane) is present in an amount of from 0.5 to 10% by weight, based on the total amount of the composition.

4. Composition according to any one of Claims 1 to 3, which further comprises at least one polyether and/or one polyesterpolyol and/or one polyetherpolyol and/or at least one derivative thereof as stabilizer or a mixture comprising at least two of these stabilizers.

5. Disperse composition comprising at least one polyorganosiloxane having groups capable of curing, at least one silane-based crosslinker and at least one polyether and/or one polyesterpolyol and/or one polyetherpolyol and/or at least one derivative thereof as stabilizer or a mixture comprising at least two of these stabilizers.

6. Composition according to any one of Claims 1 to 5, wherein the groups capable of curing are end groups of the polyorganosiloxane.

7. Composition according to any one of Claims 1 to 5, wherein the polyorganosiloxane is a linear, branched or cyclic polysiloxane.

8. Composition according to any one of Claims 1 to 7, wherein the polyorganosiloxane is an α,ω-dihydropolydimethylsiloxane.

9. Composition according to any one of Claims 1 to 8, wherein the polyorganosiloxane is present in an amount of from 20 to 80% by weight, based on the total weight of the composition.

10. Composition according to any one of Claims 1 to 9, wherein the crosslinker is selected from the group consisting of alkoxysilanes, acyloxysilanes, ketoximosilanes, aminosilanes, amidosilanes and amidoalkoxysilanes.

11. Composition according to any one of Claims 1 to 10, wherein the crosslinker is present in an amount of from 2 to 6% by weight, based on the total weight of the composition.

12. Composition according to any one of Claims 1 to 11, wherein the polyether or the polyether derivative is selected from the group consisting of polyoxyethylene derivatives of sorbitan esters and polymerization products formed from propylene oxide and ethylene oxide.

13. Composition according to any one of Claims 1 to 12, wherein the polyether or the polyether derivative is present in an amount of from 0.3 to 10% by weight, based on the total weight of the composition.

14. Composition according to any one of Claims 1 to 13, wherein the polyesterpolyol and/or the polyetherpolyol or the polyesterpolyol derivatives and/or polyetherpolyol derivatives are selected from the group consisting of ethylene oxide, propylene oxide and butylene oxide and copolymers thereof having a molecular weight of approximately 12 200 and hydroxyl number of 10 (mg KOH/g).

15. Composition according to any one of Claims 1 to 14, wherein the polyesterpolyol or the polyesterpolyol derivative is present in an amount of from 0.3 to 20% by weight, based on the total weight of the composition.

16. Composition according to any one of Claims 1 to 15, wherein the polyetherpolyol or the polyetherpolyol derivative is present in an amount of from 0.3 to 20% by weight, based on the total weight of the composition.

17. Composition according to any one of Claims 1 to 16, further comprising at least one thixotropic agent and/or one thickener and/or one anti-settling agent.

18. Composition according to Claim 17, wherein (pyrogenic) silica is used as thickener.

19. Sealant obtainable by curing the composition according to any one of the preceding claims.

20. Use of a poly(alkylsiloxane) as defined in any one of Claims 1 to 3 as a reinforcing agent in disperse compositions for polyorganosiloxane-based sealants.

## Revendications

1. Composition dispersée, contenant au moins un polyorganosiloxane avec des groupes aptes au durcissement, au moins un agent de réticulation à base de silane, au moins une huile de silicone en tant que plastifiant et/ou un hydrocarbure en tant que diluant et en tant que renforçateur au moins un poly(alkylsiloxane) de formule (I) 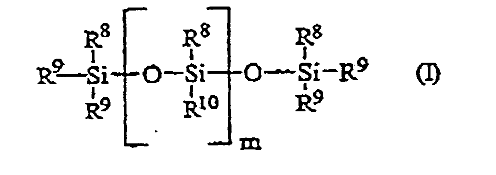 dans laquelle
R⁸ est un radical alkyle en C₁-C₈,
R⁹ représente, chacun indépendamment des autres, un atome d'hydrogène, un groupe hydroxy, un reste alkyle en C₁-C_{8,} de préférence un groupe méthyle, éthyle ou propyle, ou un reste alcoxy en C₁-C₈, de préférence un groupe méthoxy, éthoxy ou propoxy, les groupes Si terminaux étant de préférence un groupe méthylhydroxysilyle ou triméthylsilyle,
R¹⁰ est un reste alcoxy en C₁-C₈, un groupe amino -NR¹¹R¹², un groupe amido -N(R¹¹)COR¹², un groupe cétoximo -ONCR¹¹R¹² ou un groupe acyloxy -OCOR¹¹, chacun de R¹¹ et R¹² étant indépendamment de l'autre un atome d'hydrogène, un reste alkyle en C₁-C₈ ou un reste cycloalkyle en C₃-C₇, et
m est un nombre entier et représente 2 ou plus.

2. Composition selon la revendication 1, dans laquelle m est un nombre entier de 8 à 20 compris.

3. Composition selon la revendication 1 ou 2, dans laquelle le poly(alkylsiloxane) est présent en une quantité de 0,5 à 10 % en poids par rapport à la quantité totale de la composition.

4. Composition selon l'une des revendications 1 à 3, qui contient en outre au moins un polyéther et/ou un polyesterpolyol et/ou un polyétherpolyol et/ou au moins un dérivé de ceux-ci en tant que stabilisant, ou un mélange contenant au moins deux de ces stabilisants.

5. Composition dispersée contenant au moins un polyorganosiloxane ayant des groupes aptes au durcissement, au moins un agent de réticulation à base de silane et au moins un polyéther et/ou un polyesterpolyol et/ou un polyétherpolyol et/ou au moins un dérivé de ceux-ci en tant que stabilisant ou un mélange contenant au moins deux de ces stabilisants.

6. Composition selon l'une des revendications 1 à 5, dans laquelle les groupes aptes au durcissement sont des groupes terminaux du polyorganosiloxane.

7. Composition selon l'une des revendications 1 à 6, dans laquelle le polyorganosiloxane est un polysiloxane linéaire, ramifié ou cyclique.

8. Composition selon l'une des revendications 1 à 7, dans laquelle le polyorganosiloxane est un α, ω-dihydropolydiméthylsiloxane.

9. Composition selon l'une des revendications 1 à 8, dans laquelle le polyorganosiloxane est présent en une quantité de 20 à 80 % en poids par rapport au poids total de la composition.

10. Composition selon l'une des revendications 1 à 9, dans laquelle l'agent de réticulation est choisi dans le groupe constitué d'alcoxysilanes, d'acyloxysilanes, de cétoximosilanes, d'aminosilanes, d'amidosilanes et d'amidoalcoxysilanes.

11. Composition selon l'une des revendications 1 à 10, dans laquelle l'agent de réticulation est présent en une quantité de 2 à 6 % en poids par rapport au poids total de la composition.

12. Composition selon l'une des revendications 1 à 11, dans laquelle le polyéther ou le dérivé de polyéther est choisi dans le groupe constitué de dérivés polyoxyéthylénés des esters du sorbitan et de produits de polymérisation de l'oxyde de propylène et de l'oxyde d'éthylène.

13. Composition selon l'une des revendications 1 à 12, dans laquelle le polyéther ou le dérivé de polyéther est présent en une quantité de 0,3 à 10 % en poids par rapport au poids total de la composition.

14. Composition selon l'une des revendications 1 à 13, dans laquelle le polyesterpolyol ou le polyétherpolyol, ou les dérivés de polyesterpolyol ou de polyétherpolyol sont choisis dans le groupe constitué d'oxydes d'éthylène, de propylène et de butylène et de copolymères de ceux-ci ayant une masse moléculaire d'environ 12 200 et un indice d'hydroxyle de 10 (mg KOH/g).

15. Composition selon l'une des revendications 1 à 14, dans laquelle le polyesterpolyol ou le dérivé de polyesterpolyol est présent en une quantité de 0,3 à 20 % en poids par rapport au poids total de la composition.

16. Composition selon l'une des revendications 1 à 15, dans laquelle le polyétherpolyol ou le dérivé de polyétherpolyol est présent en une quantité de 0,3 à 20 % en poids par rapport au poids total de la composition.

17. Composition selon l'une des revendications 1 à 16, qui contient en outre au moins un agent thixotropique et/ou un épaississant et/ou un agent anti-sédimentation.

18. Composition selon la revendication 17, dans laquelle on utilise en tant qu'épaississant de la silice (pyrogène).

19. Masse d'étanchéité pouvant être obtenue par durcissement de la composition selon l'une des revendications précédentes.

20. Utilisation d'un poly(alkylsiloxane) tel que défini dans l'une des revendications 1 à 3, en tant que renforçateur dans des compositions dispersées pour masses d'étanchéité à base d'un polyorganosiloxane.
